# EUROPÄISCHE PATENTSCHRIFT

(11) **EP 1 261 451 B1**
(45) Veröffentlichungstag und Bekanntmachung des Hinweises auf die Patenterteilung: **06.10.2004**
(21) Anmeldenummer: 01905777.7
(22) Anmeldetag: 15.02.2001
(51) Int. Cl.: B23K 26/06, B23K 26/00

(54) **VERFAHREN ZUM BEARBEITEN VON WERKSTÜCKEN MITTELS MEHRERER LASERSTRAHLEN**
METHOD FOR THE MACHINING OF WORKPIECES BY MEANS OF SEVERAL LASER BEAMS
PROCEDE POUR USINER DES PIECES AU MOYEN DE PLUSIEURS RAYONS LASER

(30) Priorität: 15.02.2000 DE 10006516
(43) Veröffentlichungstag der Anmeldung: 04.12.2002
(73) Patentinhaber: DATACARD CORPORATION, Minnetonka, MN 55343-9015 (US)
(72) Erfinder: KREUTER, Rüdiger, 64297 Darmstadt (DE); BIELESCH, Ulrich, 56132 Frücht (DE)
(74) Vertreter: Alber, Norbert, Dipl.-Ing.
(86) Internationale Anmeldenummer: PCT/EP2001/001708
(87) Internationale Veröffentlichungsnummer: WO 2001/060560

(56) Entgegenhaltungen:
- EP-A- 0 308 512
- DE-A- 3 904 287
- US-A- 4 982 166

## Beschreibung

Die Erfindung betrifft ein Verfahren zum Bearbeiten eines Werkstückes mit Hilfe mehrerer Laserstrahlen an der gleichen Bearbeitungsstelle, dessen Gattung in der EP-A-0 308 512 offenbart ist.

Laserlicht wird heute industriell für unterschiedliche Zwecke eingesetzt:
- mit hohen Energiedichten für das Schweißen oder Brennschneiden unterschiedlichster, auch sehr harter Materialien wie Stahl,
- mit demgegenüber verringerten Energiedichten zum Gravieren von Materialien durch Verdampfen bzw. Verbrennen von Material auf der Oberfläche eines Substrates.

Einen Sonderfall stellt dabei das Verfärben z.B. von Kunststoff von einer Ausgangsfarbe in einen Grauton oder in Schwarz dar, was zum Erzeugen von Bilddarstellungen oder Beschriftungen auf Kunststoffkarten, beispielsweise Kreditkarten, Ausweiskarten oder ähnlichen Kunststoffkarten, aber auch auf anderen Substraten, wie papier- oder textilähnlichen Materialien, wie etwa Ausweisen, verwendet wird.

Entsprechend unterschiedlich sind die Anforderungen an die verwendeten Laserquellen und deren Zusatzvorrichtungen:

Beim Schweißen, Brennschneiden und teilweise auch beim Gravieren - abhängig von der Härte des zu gravierenden Materials - steht meist ein möglichst großer Materialabtrag pro Zeiteinheit im Vordergrund und damit die Forderung nach einer möglichst hohen Energiedichte des Laserstrahls.

Dabei spielt der Absorptionsgrad des Laserlichts, also die Absorptionsfähigkeit, im zu bearbeitenden Material eine große Rolle, die teilweise einen größeren Einfluß auf das Bearbeitungsergebnis hat als die Ausgangs-Laserleistung.

Kontinuierlich arbeitende Laser, sogenannte CW-Laser, bringen eine im Vergleich zum gepulsten Laser geringe Energiedichte pro Zeiteinheit der Bestrahlung in das Material des Werkstoffes ein.

Demgegenüber bewirken gepulste Laser einen sehr viel höheren Energieeintrag pro Zeitdauer der Bestrahlung, wobei die einzelnen Lichtblitze jedoch nur eine sehr geringe zeitliche Dauer besitzen. Dadurch lassen sich auch hochschmelzende Materialien bearbeiten.

Die Erzeugung oder Aufrechterhaltung einer geeigneten Plasmawolke zur Effizienzverbesserung wird aktiv genutzt. Beispielsweise ist es aus der EP-A-0 481 270 bekannt, Materialbearbeitung mittels eines mit geringem Aufwand zu betreibenden CW-Lasers durchzuführen. Dessen Absorptionsgrad und damit dessen Effizienz wird verbessert, indem auf oder in Fortschrittrichtung unmittelbar vor die Bearbeitungsstelle des CW-CO₂-Lasers ein CO₂-Impulslaser gerichtet wird, dessen Pulsenergie und Pulsfrequenz zwar nicht ausreicht, die gewünschte Bearbeitung durchzuführen, jedoch ausreicht, um eine kleine Plasmawolke an der Bearbeitungsstelle zu erzeugen und damit die eigentliche Materialbearbeitung des CW-CO₂-Lasers zu steigern.

Dabei wird der CO₂-Impulslaser mit dem CW-CO₂-Laser in einem rückwärts betriebenen Strahlteiler zusammengeführt und über eine gemeinsame Strahlführung und weitere Optik als Bearbeitungsstrahl auf das Werkstück geleitet.

Dies geschieht offensichtlich ohne eine lineare Polarisierung der beiden Laserstrahlen.

Weiterhin ist bekannt, daß abhängig vom Einfallswinkel die Absorptionswirkung eines linear polarisierten Laserstrahles im Material eines Werkstückes höher ist als die Absorption bei einem stochastisch polarisierten oder zirkular polarisierten Laserstrahl. Daher kann es sich lohnen, einen solchen z.B. stochastisch polarisierten Laserstrahl linear zu polarisieren und dadurch z.B. nur 50% seiner Ausgangsenergie zu nutzen, da die Bearbeitungsqualität verbessert wird.

Im Fall der Markierung bzw. Beschriftung von niedrig schmelzenden Materialien, beispielsweise von Kunsstoffkarten, liegt das Problem nicht in der Erzeugung möglichst hoher Energiedichten an der Bearbeitungsstelle, sondern eher in der Erzielung eines möglichst schnellen Bearbeitungsfortschritts, also Schwärzungsfortschritts, um die Zeit für die Bearbeitung, also Bebilderung und/oder Beschriftung einer solchen Kunststoffkarte, möglichst gering zu halten.

Angesichts der Tatsache, daß es sich bei derartigen Plastikkarten um Massenartikel handelt, deren Einzelpreis äußerst niedrig gehalten werden muß, die Karten jedoch dennoch nur einzeln nacheinander durch einen Laser beschriftet werden können, schlägt die Amortisation der teuren Laser-Beschriftungsvorrichtung dabei über die Bearbeitungsdauer überproportional stark auf das einzelne Werkstück durch.

Derartige Kunststoffkarten können in der Regel nicht mit CW-Lasem bearbeitet werden, da die zur Schwärzung benötigte Energiedichte so hoch ist, daß sie bei cw-Laserstrahlung zur Verbrennung des Kartenmaterials führt.

Um den gerätetechnischen und finanziellen Aufwand für die Verwendung gepulster Laser, insbesondere deren Kühlanlagen, teuren Verschleißteilen, wie Blitzlampen, Hochspannungsschaltem und ähnliches, zu vermeiden, und vor allem um nicht mit der vergleichsweise geringen Pulsfrequenz von 30 bis 2000 Hz arbeiten zu müssen, wird mit sogenannten Güte geschalteten Lasem (Q-Switch-Laser) gearbeitet. Ein solcher Q-Switch-Laser zeichnet sich dadurch aus, daß die Güte des Resonators verändert (geshuttert) wird und so Pulse erzeugt werden, deren Energiedichte pro Zeiteinheit innerhalb des Laserpulses deutlich über dem Wert bei kontinuierlichem Betrieb liegt. Der Vorteil dieser Q-Switch-Laser liegt jedoch in der hohen Frequenz von 1000 bis 100 000 Pulse/Sekunde, so daß durch Rasterung zu schwärzende Flächen mit einer relativ hohen Bearbeitungsgeschwindigkeit bearbeitet werden können.

Auch dieser erhöhten Arbeitsgeschwindigkeit sind jedoch dadurch Grenzen gesetzt, daß die in das Werkstück eingebrachte Energie pro Puls des Laserlichts mit steigender Pulsfolge-Frequenz abnimmt. Dadurch können die theoretisch erzielbaren Frequenzen von bis zu 100 KHz in der Praxis nicht genutzt werden, da beim Beschriften dann keine ausreichende Schwärzung mehr erzielt wird bzw. beim Gravieren keine oder keine ausreichende Abtragtiefe des Materials erzielt wird.

Es ist daher die Aufgabe gemäß der vorliegenden Erfindung, ein Verfahren zum Bearbeiten von Werkstücken, insbesondere zum Gravieren von z.B Metall oder zum Schwärzen von Kunststoff, zu schaffen, die trotz hoher Folge an Bearbeitungspulsen die erforderliche Mindestenergie pro Puls bietet.

Diese Aufgabe wird durch die Merkmale des Anspruchs 1 gelöst. Vorteilhafte Ausführungsformen ergeben sich aus den Unteransprüchen.

Die Erzielung einer hohen Pulsfolge auf dem Werkstoff bei gleichzeitig hoher Energie pro Puls wird erzielt durch Kopplung mehrerer, mindestens zweier, Laserstrahlen zu einem Bearbeitungsstrahl, der über eine gemeinsame Strahlführung und Strahlfokussierung auf das Werkstück geleitet wird.

Dabei werden als Laserquellen vorzugsweise Q-Switch-Laser benutzt, die vorzugsweise etwa im 90° Winkel zueinander linear polarisiert sind. Das Zusammenführen erfolgt über einen Strahlvereiniger, in der Regel einen rückwärtsbetriebenen polarisierenden Strahlteiler oder einen halbdurchlässigen Spiegel.

Dabei werden in der Regel gleiche Laser-Lichtquellen verwendet werden, jedoch ist dies nicht zwingend:

Je nach Anwendungsfall können die unterschiedlichen Eigenschaften der Laser mit unterschiedlichen Wellenlängen, beispielsweise von Infrarotlasem (IR) einerseits und Ultraviolettlasern (UV) andererseits gezielt ausgenutzt werden, die beispielsweise in unterschiedlich starker Fokussierbarkeit und unterschiedlich hoher Energiedichte pro Puls liegen:

Da unterschiedliche Materialien für die gleiche Art der Bearbeitung mittels Laser, beispielsweise graduelle Schwärzung für das Beschriften oder das Erzeugen von Graustufenbildem bzw. Materialabtrag für das Gravieren oder Schneiden unterschiedliche Energiedichten pro Puls erfordern, können gezielt Laser entsprechender Wellenlänge zur Bearbeitung eines bestimmten Materials ausgewählt werden, wenn innerhalb des gleichen zu bearbeitenden Objektes unterschiedliche Materialien, entweder in räumlich getrennten Bereichen oder als Gemisch. vorliegend, vorhanden sind. Weiterhin ist auch die Art der erzielbaren Effekte abhängig von der Wellenlänge des Lasers. So bewirken IR-Laser primär thermische Effekte, während UV-Laser in der Lage sind, molekulare Bindungen aufzubrechen. Entsprechend dieser Wirkung können derartige hinsichtlich ihrer Wellenlänge unterschiedliche Laser einerseits zum Erzeugen von Grautönen oder Schwarzabstufungen durch Erwärmen, andererseits zu Materialumwandlung durch Aufbrechen von molekularen Bindungen benutzt werden. Die Materialumwandlung kann beispielsweise zur Erzielung von Farbwirkungen benutzt werden, indem die durch das Aufbrechen einer molekularen Bindung erzielten Reaktionsprodukte überhaupt erst eine Farbwirkung hervorrufen bzw. eine andere Farbwirkung hervorrufen als das Ausgangsprodukt.

Bei der Bearbeitung ein und desselben Objektes können auch diese unterschiedlichen Effekte zeitlich gleichzeitig oder nacheinander genutzt werden, zeitlich nacheinander oder gleichzeitig, und räumlich nebeneinander oder an der gleichen Stelle.

So kann insbesondere für den Einsatz zeitlich nacheinander zunächst eine thermische Wirkung als Vorbereitungsmaßnahme für die danach stattfindende Hauptbearbeitung eingesetzt werden, oder umgekehrt der Fixierung eines zuvor durch den anderen Laser erzielten Bearbeitung dienen.

Je nach Anwendungszweck können die beiden Laser synchron betrieben werden, so daß die Pulse der verschiedenen Laser gleichzeitig im Strahlvereiniger und damit auch gleichzeitig auf dem Werkstück auftreffen. Dies führt zu einer Energie pro Puls, die der Summe der Einzelenergien der Pulse der einzelnen Laserquellen entspricht und beispielsweise beim Gravieren zu einem verstärkten Materialabtrag an der momentanen Bearbeitungsstelle, also einer vergrößerten Gravurtiefe, führt.

Bei der Schwärzung von Kunststoff wird beispielsweise mit einem einzigen Laser nur ein Grauton erzielt, bei zeitlich synchroner Steuerung zweier oder gar mehrerer Laser ein dunklerer Grauton bzw. Schwarz.

Hier wird gerade bei der Erzeugung von Graustufenbildem durch selektive Schwärzung einzelner Punkte der Oberfläche der prinzipielle Vorteil des Einsatzes von gepulsten Lasern deutlich:

Da der Bearbeitungsstrahl über eine auch in mechanischer Hinsicht aufwendige Strahlführung, beispielsweise steuerbare Umlenkspiegel, erfolgt, müßte für die Erzielung von Grauabstufungen des über die Oberfläche des Objektes geführten Strahles eines kontinuierlichen (CW) Lasers die Fortschrittsgeschwindigkeit des Auftreffpunktes, mithin also die Schwenkgeschwindigkeit der beteiligten Umlenkspiegel und anderer mechanischer Elemente etc. verändert werden. Da diese Geschwindigkeitsänderungen angesichts der sehr kleinen Bilddarstellungen und geforderten hohen Auflösungen sehr schnell gehen müßte, würden erhebliche bis unlösbare Probleme bei der entsprechenden Ansteuerung dieser mechanischen Elemente auftreten.

Bei Verwendung eines gepulsten Lasers wird dagegen die Geschwindigkeit, mit der der (gepulste) Laserstrahl über das Objekt bewegt wird, konstant gehalten, statt dessen jedoch die Pulsfrequenz geändert, was eine Änderung der Abstände der geschwärzten Punkte und damit innerhalb der geforderten Auflösung eine Veränderung des Grautones der bearbeiteten Flächen ergibt. Sofern die Veränderung der Pulsfrequenz indirekt eine zusätzliche Veränderung der Energie pro Puls bewirkt, kann dies entweder bei der Festlegung der Pulsfrequenz zusätzlich kompensierend berücksichtigt werden, oder die Anregungsenergie des Lasers wird entsprechend verändert.

Es soll auch erwähnt werden, daß nicht unbedingt linear polarisierte Laser Verwendung finden müssen, sondern ebensogut ein zirkular polarisierter Laser mit einem linear polarisierten Laser zusammengeführt werden kann. Auch die gekoppelte gemeinsame Verwendung eines kontinuierlichen Lasers zusammen mit einem gepulsten Laser ist möglich.

Femer kann die bei Lasem unterschiedlicher Wellenlänge auftretende unterschiedlich gute Fokussierbarkeit gezielt ausgenutzt werden:

Bei immer gleichem Abstand der zu bearbeitenden Objektfläche von der fokussierenden Linse bestrahlen unterschiedlich stark fokussierbare Laser hinter der Linse in der Regel hinsichtlich ihrer Fläche unterschiedlich große Bildpunkte bzw.- Bildflächen. Beispielsweise ergibt sich bei Einstellung des Objekts auf den Fokusabstand des einen Laserstrahls von der Linse für den anderen Laserstrahl ein relativ großer Bildpunkt.

Da jedoch aus Gründen der Überlagerung einzelner geschwärzter Punktbereiche bei der Materialschwärzung und insbesondere Erzielung von Graustufenbildern das Material ohnehin nicht exakt auf den Fokus der verwendeten Laserstrahlen eingestellt wird, um eine endliche Größe des geschwärzten Punktes zu erzielen, kann ein solcher Abstand des Objekts zur Linse eingestellt werden, der für beide Laserstrahlen eine etwa gleiche Größe der geschwärzten Punkte ergibt.

In der Regel werden die beiden unterschiedlichen Laserquellen jedoch so angesteuert, daß sie ihre Pulse zeitlich versetzt, also abwechselnd, abgeben und damit der Zeitabstand zwischen dem Auftreffen zweier Pulse auf dem Werkstück beispielsweise nur halb so groß gewählt werden kann wie beim Gravieren bzw. Beschriften mit nur einem Laser. Damit kann in diesem Fall die Bearbeitungsgeschwindigkeit verdoppelt und die Zeit zum Erstellen eines Fertigproduktes, beispielsweise einer beschrifteten Kunststoffkarte, halbiert werden.

Anstelle von Q-Switch-Lasem können auch preisgünstige Diodenlaser oder andere Laser mit ausreichender Energie pro Puls eingesetzt werden.

Die Pulsfolge auf dem Werkstück und damit die Bearbeitungsgeschwindigkeit läßt sich weiter erhöhen, indem mehr als zwei gepulste und polarisierte Laser zu einem Bearbeitungs-Laserstrahl gekoppelt werden. Zu diesem Zweck werden, wie vorher beschrieben, zunächst ein erster und ein zweiter Laserstrahl, die eine unterschiedliche lineare Polarisierung aufweisen, über einen Strahlvereiniger zusammengeführt. Der aus Pulsen wechselnder Polarität bestehende Teil-Bearbeitungs-Laserstrahl wird stromabwärts des Strahlvereinigers durch ein aktives optisches Bauelement geführt, dessen Zweck darin besteht, die lineare Polarisierung des einen Ausgangs-Laserstrahles umzuändem in die lineare Polarisierung des anderen Ausgangs-laserstrahles, so daß ein Teil-Bearbeitungsstrahl mit gleicher linearer Polarsierung erzielt wird.

Dies ist erzielbar, indem ein zeitlich sehr gut steuerbares aktives optisches Bauelement verwendet wird, beispielsweise eine Pockelszelle, die diese Wirkung nur bei elektrischer Ansteuerung hat, ansonsten den Laserstrahl unverändert durchläßt. Wenn die Pockelszelle zeitlich gekoppelt mit immer demselben Ausgangs-Laserstrahl aktiviert wird, wird immer dieser Ausgangs-Laserstrahl in seiner linearen Polarisierung geändert, wobei die Pockelszelle so gewählt ist, daß die Änderung genau dem Unterschied zwischen den linearen Polarisierungen der beiden Ausgangsstrahlen entspricht.

Dem auf diese Art und Weise homogen polarisierten Teil-Bearbeitungsstrahl, der beispielsweise eine vertikale Polarisierung aufweist, kann über einen weiteren stromabwärtigen Strahlvereiniger ein weiterer Laserstrahl, der eine dann horizontale lineare Polarisierung aufweist, zugeführt werden. Dies kann, wiederum nach Gleichschaltung der Polarisation über ein aktives optisches Bauelement noch mehrfach hintereinander geschehen, wobei nach der letzten Strahlzusammenführung keine Anpassung der Polarisierung der beiden Teilstrahlen mehr notwendig ist.

Eine Ausführungsform gemäß der Erfindung ist im folgenden anhand der Figuren beispielhaft näher beschrieben. Es zeigen:
- Fig. 1:: eine bekannte Vorrichtung zum Erzeugen eines aus zwei Laserquellen gebildeten Arbeitsstrahles,
- Fig. 2:: Diagramme zur zeitlichen Schaltung der Komponenten,
- Fig. 3:: Diagramme für eine andere zeitliche Schaltung der Komponenten,
- Fig. 4:: eine zur Durchführung des erfindungsgemässen Verfahrens geignete Vorrichtung zur Kopplung dreier Laserquellen zu einem Arbeits-Laserstrahl, und
- Fig. 5:: Diagramme zur zeitlichen Kopplung der Komponenten aus Fig. 4.

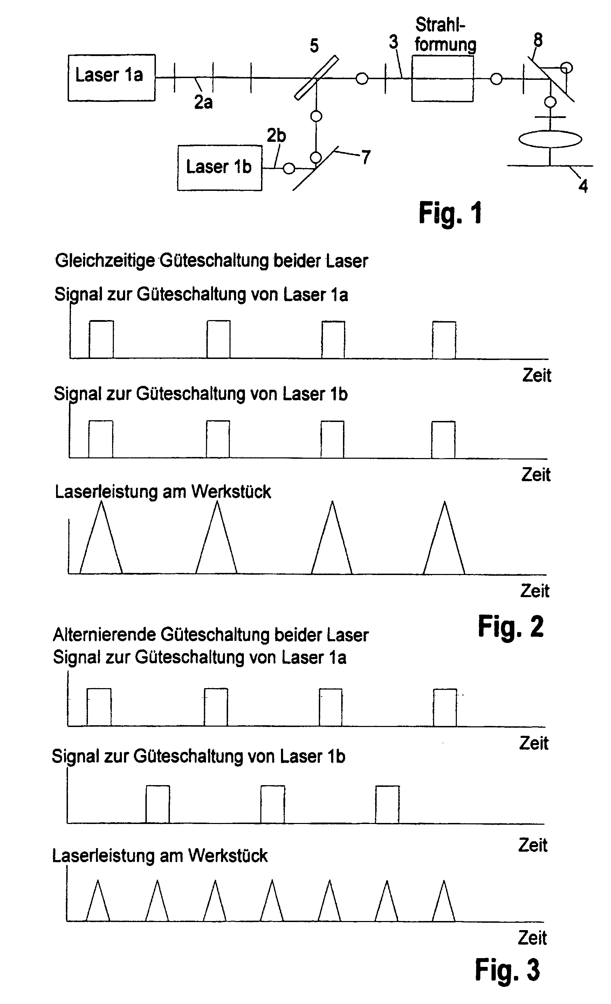

Die Figuren 1-3 betreffen keine Ausführungsarten des Erfindung, und sind nur als Hintergrund zu betrachten.

Fig. 1 zeigt die beiden Laserquellen 1a, 1b, die jeweils einen Laserstrahl 2a bzw. 2b abgeben. Dabei ist Laserstrahl 2a beispielsweise parallel zur Blattebene polarisiert, symbolisiert durch die Querstriche im Laserstrahl 2a, dagegen Laserstrahl 2b senkrecht zur Blattebene linear polarisiert, symbolisiert durch die Kreise im Laserstrahl 2b.

Die beiden Laserstrahlen 2a, 2b werden am Strahlvereiniger 5, beispielsweise einem halbdurchlässigen Spiegel, zusammengeführt, indem der eine Laser 1a den halbdurchlässigen Spiegel durchläuft, während der Laserstrahl 2a rechtwinklig dazu im 45° Winkel auf die Schrägfläche auf die halbdurchlässigen Spiegel auftrifft und dadurch um 90° Grad und somit parallel zum und deckungsgleich mit dem durchlaufenden Laserstrahl 1a umgelenkt wird.

Wenn ursprünglich die beiden Laser 1a und 1b parallel zueinander liegen, wird vorher der Laserstrahl 2b über einen Spiegel 7 im 90° Grad Winkel umgeleitet.

Der im Strahlvereiniger 5 zusammengeführte Bearbeitungs-Laserstrahl 3 durchläuft eine Vorrichtung zur Strahlformung und eine Strahlführung, die aus einem oder mehreren der dargestellten zum Teil schwenkbaren Spiegel 8 besteht und trifft nach Strahlfokussierung auf das Werkstück 4 auf, wobei beide Teilstrahlen des überlagerten Bearbeitungs-Laserstrahles 3 ihre ursprüngliche lineare und voneinander verschiedene Polarisierung beibehalten.

Fig. 2 zeigt die erste Möglichkeit der zeitlichen Schaltung der beiden Laser 1a, 1b bzw. deren gepulster Laserstrahlen 2a, 2b:

Die Pulse sind zeitlich so gesteuert, daß sie zeitgleich im Strahlvereiniger 5 auftreffen und bei gleicher Laufwegslänge bis dorthin somit auch zeitgleich die Laserquellen 1a, 1b verlassen. Dadurch treffen die Pulse auch zeitgleich auf dem Werkstück 4 auf, so daß dort besonders hohe Energiewerte pro Puls, entsprechend der Summe der Energiewerte eines jeweils einzigen Pulses des Laserstrahles 2a und 2b, auftreten, allerdings mit zeitlich großem Abstand.

Fig. 3 zeigt die intermittierende Ansteuerung der Laserquellen 1a, 1b, so daß deren Pulse zeitversetzt, insbesondere gleichmäßig zeitversetzt, abwechselnd im Strahlvereiniger 5 ankommen und damit auch das Werkstück 4 zeitlich abwechselnd erreichen.

Die Folge sind geringere Energien pro Puls am Werkstück, jedoch mit dem halben zeitlichen Abstand gegenüber der zeitlichen Synchronisierung gemäß Abb. 2.

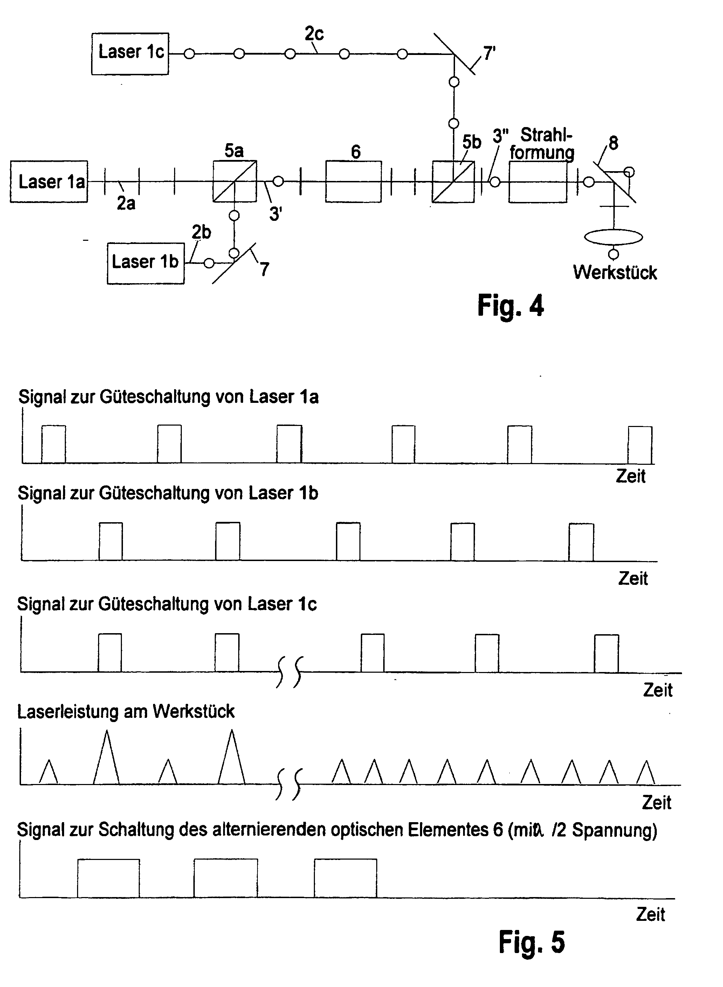

Fig. 4 zeigt eine Vorrichtung zum Bearbeiten mittels dreier zusammengeführter Laserstrahlen 2a, b, c :

Die Zusammenführung der ersten beiden Laserstrahlen 2a und 2b aus den Laserquellen 1 a, 1 b geschieht analog zur Fig. 1. Der aus dem Strahlvereiniger 5a, in diesem Fall einem Prisma, austretende Teil-Bearbeitungsstrahl 3' wird anschließend durch ein aktives optisches Bauelement 6, beispielsweise eine Pockelszelle, geführt, die immer nur dann aktiviert wird, wenn z.B. ein Puls des Laserstrahles 2b dieses Element durchläuft, so daß das aktive optische Bauelement 6 dessen lineare Polarisierung ändert in die lineare Polarisierung entsprechend dem Laserstrahl 2a. Der so homogen polarisierte Teif-Bearbeitungsstrahl 3' wird in einem weiteren Strahlzusammenführer 5b mit einem weiteren Laserstrahl 2c aus einer Laserquelle 1 c vereinigt. Der neu hinzugeführte Laserstrahl 2c ist ebenfalls linear polarisiert, jedoch wiederum unterschiedlich zum homogen polarisierte Teilstrahl 3', nämlich beispielsweise in gleicher Richtung wie der Laserstrahl 2b.

Auch hier erfolgt - bei Parallellage der ursprünglichen Laserquellen 1a, b, c - vor dem Einbringen der Laserstrahlen 2b, 2c in die Strahlzusammenführer 5a, 5b eine Umlenkung um 90° über entsprechende Spiegel 7, 7' in die Strahlzusammenführer 5a bzw. 5b hinein, um gleiche optische Weglängen bei geringem Platzbedarf zu realisieren.

Der aus dem zweiten Strahlzusammenführer 5b austretende Bearbeitungs-Laserstrahl 3" besteht aus Pulsen unterschiedlicher linearer Polarisierung und wird nicht mehr homogen polarisiert. Er durchläuft vor dem Auftreffen auf das Werkstück 4 lediglich noch die obligatorischen Vorrichtungen zur Strahlformung, zur Strahlführung, umfassend ein oder mehrere lenkbare Spiegel 8, und zur Strahlfokussierung.

Zusätzlich muß berücksichtigt werden, daß es nicht ausreicht, die von den einzelnen Lasern erzeugten Strahlen über die richtige Winkelstellung der Umlenkspiegel und Prismen etc. exakt parallel zu führen, sondern die Strahlen müssen dekkungsgleich geführt werden, da jeder Versatz auch zu einem Versatz der durch die unterschiedlichen Laserstrahlen auf dem Objekt erzeugten Wirkungsbereiche, z. B. geschwärzten Punkte, führt. Da dieses Problem auch durch unterschiedliche Wärmedehnungen unterschiedlicher, an der Strahlführung beteiligter, mechanischer Komponenten beeinflußt wird, besteht eine der Gegenmaßnahmen darin, die optische Laufwegslänge der unterschiedlichen Laserstrahlen bis zu ihrer Zusammenführung exakt gleich zu wählen.

Fig. 5 zeigt die zeitliche Steuerung:

Wenn Laser 1a und 1b zeitlich abwechselnd betrieben werden, so daß also deren Pulse zeitlich versetzt zueinander abwechselnd auf den ersten Strahlzusammenführer 5a auftreffen, liegt an dem aktiven optischen Bauelement 6, beispielsweise der Pockelszelle, nur dann Strom an und aktiviert dieses, wenn es ein Puls des zweiten Laserstrahles 2b durchläuft.

Die Zeitdauer der Aktivierung des optischen Bauelementes 6 ist dabei größer als die Zeitdauer der Güteschaltung des zu beeinflussenden Laserstrahles, so daß dessen Zeitdauer zuverlässig innerhalb der Zeitdauer der Aktivierung des optischen Bauelementes 6 liegt. Der zuletzt eingekoppelte Laserstrahl, beispielsweise der Strahl 2c, muß nicht mehr einer Polarisations-Angleichung mit dem übrigen Bearbeitungsstrahl unterworfen werden.

Auch ist für diesen letzten Laserstrahl 2c Wahlfreiheit hinsichtlich zeitlich synchroner oder zeitlich versetzter Steuerung der Pulsfolge dieses letzten Laserstrahls 2c zu den übrigen Laserstrahlen 2a, 2b gegeben. Auch während der Bearbeitung kann von zeitlich synchron auf zeitlich versetzt übergegangen werden und umgekehrt.

Wie die Darstellungen in dem unteren Teil der Fig. 5 zeigen, lassen sich dabei - wie anhand der Figuren 2 oder 3 erläutert, wieder die beiden Möglichkeiten einer größeren oder kleineren Frequenz des Auftreffens von Pulsen auf dem Objekt bewirken, wobei die höhere Frequenz eine geringere Energie pro Puls und umgekehrt zur Folge hat. Auch dies kann für das gewünschte Arbeitsergebnis, beispielsweise dem Schwärzungsgrad eines Graustufenbildes an der jeweiligen Stelle, gezielt eingesetzt werden.

Dadurch wird dessen beispielsweise senkrecht zur Blattebene linear polarisiertes Licht in parallel zur Blattebene polarisiertes Licht umgewandelt, entsprechend der linearen Polarisierung des Lasers 1a, so daß am Ausgang des aktiven optischen Bauelementes 6 ein homogen polarisierter gepulster Laserstrahl vorliegt, also mit Pulsen, die alle die gleiche lineare Polarisierung aufweisen. Dieser linear polarisierte Laserstrahl 3' läßt sich wie zuvor beschrieben über einen weiteren Strahlvereiniger mit einem dritten Laserstrahl 2c zusammenführen. Der aus drei Laserstrahlen gewonnene Laserstrahl 3" läßt sich nun wie oben beschrieben auf das Werkstück leiten. Durch den alternierenden Einsatz weiterer Bauelemente zur gezielten Polarisationsänderung und zur Strahlenvereinigung lassen sich weitere Laser dazukoppeln.

### BEZUGSZEICHENLISTE

- 1a, 1b, 1c: Laserquellen
- 2a, 2b, 2c: Laserstrahlen
- 3: Bearbeitungs-Laserstrahlen
- 4: Werkstück
- 5: Strahl-Vereiniger
- 6: aktives optisches Bauelement
- 7: Spiegel
- 8: Spiegel

## Patentansprüche

1. Verfahren zum Bearbeiten von Werkstücken (4) mittels eines Bearbeitungs-Laserstrahls (3"), wobei
wenigstens drei Laserstrahlen (2a, 2b, 2c) zusammengeführt werden und gemeinsam den Bearbeitungs-Laserstrahl (3") bilden, indem ggf. mehrfach hintereinander, und der Bearbeitungslaserstrahl (3") über eine Strahlführung auf das Werkstück (4) geleitet wird,
**dadurch gekennzeichnet, daß**
- ein erster diskontinuierlicher Laserstrahl (2a) und ein zweiter diskontinuierlicher Laserstrahl (2b) zeitlich zueinander versetzt in einem Strahlvereiniger zusammengeführt werden,
- der so erhaltene Teil-Bearbeitungsstrahl (3') durch ein aktives optisches Bauelement (6) geführt wird, welches die lineare Polarisation des Teil-Bearbeitungsstrahles (3') ändern kann und welches immer dann aktiviert wird, wenn der eine Laserstrahl (2b) auf das aktive optische Bauelement (6) auftrifft und dadurch dessen Polarisation in die Polarisation des anderen Laserstrahles (2a) ändert, jedoch dann deaktiviert ist, wenn der andere Laserstrahl (2a) auf das Bauelement (6) auftrifft,
- der so erhaltene veränderte Teil-Bearbeitungsstrahl (3'), der nunmehr eine lineare Polarisation entsprechend dem einen Laserstrahl (2a) aufweist, in einem weiteren Strahlvereiniger (5b) mit einem weiteren Laserstrahl (2c), dessen lineare Polarisation sich von der des Teil-Bearbeitungsstrahles (3') unterscheidet, zusammengeführt wird.

2. Verfahren nach Anspruch 1,
**dadurch gekennzeichnet, daß**
- der so erhaltene Bearbeitungslaserstrahl (3") durch ein weiteres aktives optisches Bauelement geführt wird, welches in der Lage ist, die insbesondere lineare Polarisation des einen eintreffenden Strahles, z.B. des weiteren Laserstrahles (2c), zu ändern in die insbesondere lineare Polarisation des Teil-Bearbeitungsstrahles (3'), wodurch ein Bearbeitungslaserstrahl (3") mit der linearen Polarisation des z.B. ersten Laserstrahles (2a) entsteht usw.

3. Verfahren nach Anspruch 1 oder 2,
**dadurch gekennzeichnet, daß**
- das aktive optische Element (6) eine Pockelszelle ist.

4. Verfahren nach Anspruch 1oder 2,
**dadurch gekennzeichnet, daß**
- das aktive optische Element (6) eine Kerrzelle ist.

5. Verfahren nach einem der vorhergehenden Ansprüche
**dadurch gekennzeichnet , daß**
- das aktive optische Element (6) die in bestimmten Materialien durch mechanische Belastung, z.B. Druck, erzeugte Doppelbrechung ausnutzt und insbesondere das Material ein einachsiger transparenter Kristall, wie etwa ein NaCl- oder LiF-Kristall, oder Acrylharz ist.

## Claims

1. A process for machining workpieces (4) by means of a machining laser beam (3"), whereby
at least three laser beams (2a, 2b, 2c) are brought together and jointly form the machining laser beam (3) by a procedure whereby in succession possibly a multiple of times, and the machining laser beam (3") is passed by way of a beam-guide means on to the workpiece (4),
**characterized in that**
- a first discontinuous laser beam (2a) and a second discontinuous laser beam (2b) are brought together in a beam-combining means in mutually time-displaced relationship,
- the partial machining beam (3') obtained **in that** way is passed through an active optical component (6) which can alter the linear polarisation of the partial machining beam (3') and which is activated whenever the one laser beam (2b) impinges on the active optical component (6) and thereby alters its polarisation to the polarisation of the other laser beam (2a), but is deactivated when the other laser beam (2a) impinges on the component (6),
- the altered partial machining beam (3') which is obtained **in that** way and which now has linear polarisation corresponding to the one laser beam (2a) is brought together in a further beam-combining means (5b) with a further laser beam (2c) whose linear polarisation differs from that of the partial machining beam (3').

2. A process according to claim 1 **characterized in that** the partial machining beam (3") obtained **in that** way is passed through a further active optical component which is capable of altering the in particular linear polarisation of the one arriving beam, for example the further laser beam (2c), to the in particular linear polarisation of the partial machining beam (3'), whereby a machining laser beam (3") with the linear polarisation of the for example first laser beam (2a) is produced, and so forth.

3. A process according to claim 1 or claim 2 **characterized in that** the active optical element (6) is a Pocket cell.

4. A process according to claim 1 or claim 2 **characterized in that** the active optical element (6) is a Kerr cell.

5. A process according to one of the preceding claims **characterized in that** the active optical element (6) utilises the birefringence which is produced in certain materials by mechanical loading, for example pressure, and in particular the material is a uniaxial transparent crystal such as for example an NaCl- or LiF-crystal, or acrylic resin.

## Revendications

1. Procédé pour l'usinage des pièces (4) par l'intermédiaire d'un faisceau de rayons laser (3"), où au moins trois rayons laser (2a, 2b, 2c) sont conduits ensemble pour constituer un faisceau laser d'usinage (3"), s'il est nécessaire plusieurs fois consécutivement et le faisceau de travail (3") est conduit sur la pièce (4) par l'intermédiaire d'un guide de faisceau, **caractérisé en ce qu'**,
- un premier rayon laser discontinu (2a) et un second rayon laser discontinu (2b), décalés en temps l'un de l'autre sont unifiés dans un concentrateur de rayons,
- le faisceau partiel de travail (3') tellement obtenu est guidé par un élément constructif optique actif (6) qui peu changer la polarité linéaire du faisceau partiel de travail (3') et qui sera toujours activé quand l'un d'entre les rayons laser (2b) paraît sur l'élément constructif optique actif (6) et par cela change la polarité de celui-ci dans la polarité de l'autre rayon laser (2a), mais est désactivé quand l'autre rayon laser paraît sur l'élément constructif (6),
- le faisceau partiel de travail (3') modifié, tellement obtenu qui maintenant présente une polarité linéaire correspondante au rayon laser (2a) est unifié dans un concentrateur de rayons (5b) avec un autre rayon laser (2c) dont la polarité linéaire est différente de celle-là du faisceau de travail partiel (3').

2. Procédé selon la revendication 1, **caractérisé en ce que**,
- le faisceau laser de travail (3") tellement obtenu est guidé par un autre élément optique actif qui est en état de changer la polarité, spécialement linéaire de l'un d'entre les rayons d'entrée, par exemple du rayon supplémentaire (2c), spécialement la polarité linéaire du faisceau partiel (3'), par cela obtenant un faisceau laser de travail (3") avec la polarité linéaire par exemple du premier rayon laser (2a) et ainsi de suite.

3. Procédé selon la revendication 1 ou 2, **caractérisé en ce que**, l'élément optique actif (6) est une cellule Pockel.

4. Procédé selon la revendication 1 ou 2, **caractérisé en ce que**, l'élément optique actif (6) est une cellule Kerr.

5. Procédé selon l'une des revendications antérieures, **caractérisé en ce que**, l'élément optique actif (6) utilise la biréfringence obtenue dans certaines matières par charge mécanique par exemple compression et spécialement la matière est en cristal transparent uniaxe comme serait un cristal NaCl - ou LiF ou une résine acrylique.
